(19) Europäisches Patentamt
European Patent Office
Office européen des brevets

(11) **EP 4 005 027 B1**

(12) **EUROPEAN PATENT SPECIFICATION**

(45) Date of publication and mention
of the grant of the patent:
**28.05.2025 Bulletin 2025/22**

(21) Application number: **20867398.8**

(22) Date of filing: **03.01.2020**

(51) International Patent Classification (IPC):
*H01Q 25/02* (2006.01)   *H01Q 1/24* (2006.01)
*H01Q 21/06* (2006.01)   *H04B 1/40* (2015.01)

(52) Cooperative Patent Classification (CPC):
**H04B 3/52; H01Q 1/246; H01Q 3/40; H04B 1/40;
H04B 3/56**

(86) International application number:
**PCT/KR2020/000086**

(87) International publication number:
**WO 2021/060629 (01.04.2021 Gazette 2021/13)**

(54) **BASE STATION ANTENNA AND BASE STATION**

BASISSTATIONSANTENNE UND BASISSTATION

ANTENNE DE STATION DE BASE ET STATION DE BASE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.09.2019 CN 201910904020**

(43) Date of publication of application:
**01.06.2022 Bulletin 2022/22**

(73) Proprietor: **Samsung Electronics Co., Ltd.
Suwon-si, Gyeonggi-do 16677 (KR)**

(72) Inventors:
• **CHEN, Lin**
**Shenzhen, Guangdong 518000 (CN)**
• **ZHANG, Meiling**
**Shenzhen, Guangdong 518000 (CN)**
• **LI, Qin**
**Shenzhen, Guangdong 518000 (CN)**
• **JIANG, Wei**
**Shenzhen, Guangdong 518000 (CN)**
• **YAN, Jia**
**Shenzhen, Guangdong 518000 (CN)**
• **ZHANG, Shaomin**
**Shenzhen, Guangdong 518000 (CN)**

(74) Representative: **Gulde & Partner
Patent- und Rechtsanwaltskanzlei mbB
Berliner Freiheit 2
10785 Berlin (DE)**

(56) References cited:
CN-A- 103 503 233        US-A- 5 764 187
US-A1- 2005 085 266      US-A1- 2014 132 450
US-A1- 2015 098 495      US-A1- 2015 098 495
US-A1- 2019 190 575

## Description

[Technical Field]

The present disclosure relates to communication technologies, and more particularly, to a base station antenna and a base station.

[Background Art]

A base station antenna is configured to transmit and receive signals. Transmission and reception performances of the base station antenna have greater impact on the mobile communication network. Key performances of the base station are directly affected by the size of scan angle adjustment range in the vertical direction of the base station antenna. Due to the influence of the rapidly rising side lobes, the adjustment range of the upper and lower slant angles of the conventional array antenna is limited by the number of effective input ports on a vertical plane of the array. Beam side lobes may be effectively suppressed, by adding a coupled network between an effective input port and an antenna radiating unit, so as to expand the adjustment range of up and down slant angles.

At present, in a coupled network, vector synthesis of signals is usually performed by a phase shifter and a sum-different device. Due to the use of phase shifter and sum-difference device, many hardware cross-connections exist in current coupled network, leading to complicated structure and greater insertion loss.

US 2019/190575 A1 discloses that a four-port power divider/combiner included in a first power redistribution stage is connected to two of four-port power dividers/combiners included in second power redistribution stage, and outputs output of the connected two four-port power dividers/combiners as multiple signals.

US 2015/098495 A1 discloses a base station with a second-level vector synthesis network, the base station antenna makes phase differences between multiple vector signals sent to antenna units smoother, thereby extending an adjustable range of a downtilt on the premise that the number of transceivers is as small as possible

[Disclosure of Invention]

[Technical Problem]

An aspect of the present disclosure provides a base station antenna and a base station.

[Solution to Problem]

The invention is set out in the appended set of claims, wherein the figures and respective description relate to advantageous embodiments thereof.

[Brief Description of Drawings]

The above and other aspects, features, and advantages of certain embodiments of the present disclosure will be more apparent from the following description taken in conjunction with accompanying drawings, in which:

FIG.1 is a schematic diagram illustrating a base station antenna, according to some embodiments of the present disclosure.
FIG.2 is a curve illustrating broadband characteristics of a signal synthesizer.
FIG.3 is a schematic diagram illustrating a base station antenna, according to some embodiments of the present disclosure.

[Mode for the Invention]

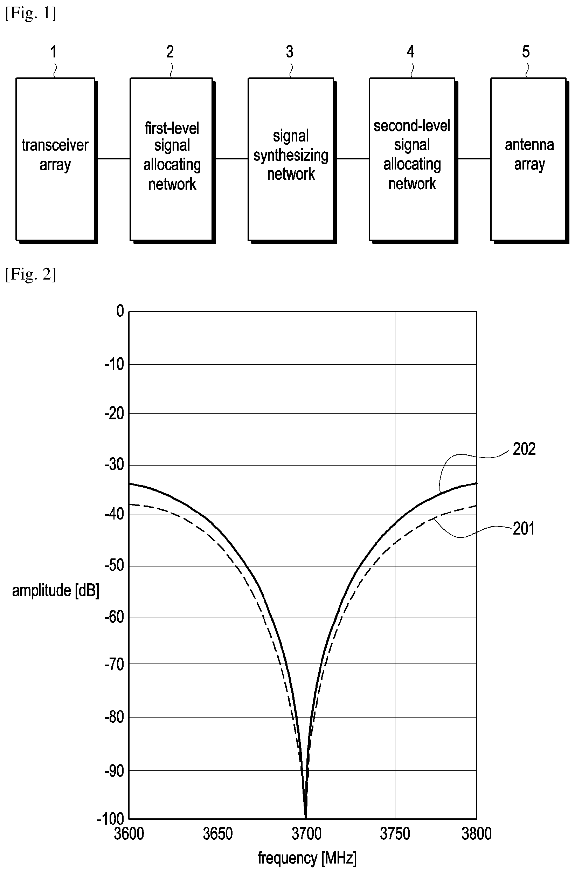

Embodiments of the present disclosure are described with reference to the accompanying drawings. Descriptions of well-known components and processing techniques are omitted so as to not unnecessarily obscure the present disclosure. The examples used herein are intended merely to facilitate an understanding of ways in which the present disclosure may be practiced and to further enable those of skill in the art to practice the present disclosure. Accordingly, the examples are not intended to be construed as limiting the scope of the present disclosure. FIG.1 is a schematic diagram illustrating a base station antenna, according to some embodiments of the present disclosure. As shown in FIG. 1, the base station antenna may include a transceiver array 1, a first-level signal allocating network 2, a signal synthesizing network 3, a second-level signal allocating network 4 and an antenna array 5.

The transceiver array 1 outputs M signals, in which M is an integer greater than 1. Here, the transceiver 1 may also be referred to as a signal input end. The quantity of transceivers in the transceiver array is consistent with the value of M.

The antenna array includes N antenna units, in which N is an integer greater than M. Here, N is other values, e.g., 6, 8, 10, 12.

The first-level signal allocating network 2, the signal synthesizing network 3, the second-level signal allocating network 4 forms a signal coupling network of the base station antenna. The signal coupling network is a network with M inputs and N outputs.

The first-level signal allocating network 2 allocates power to the M signals, and output P signals, in which P is an integer greater than M. Here, the first-level signal allocating network includes multiple power dividers. The first-level signal allocating network utilizes the power dividers to allocate power to each signal of the M signals. For example, the first-level signal allocating network divides each signal of the M signals into two or more signals.

The signal synthesizing network 3 includes multiple signal synthesizers. Each signal synthesizer utilizes two signals of foregoing P signals to synthesize two output signals, and enables the two output signals to meet respective predetermined phase and predetermined amplitude. In some embodiments, each signal synthesizer may be one hardware circuit device, e.g., which may be implemented by a microstrip line on a dielectric substrate. The signal synthesizer is a four-port device. The signal synthesizer obtains two signals via two input ports, and perform a vector synthesizing process on the two signals. On such basis, the signal synthesizer processes the two signals, based on a predetermined mathematical model, so as to output two vector signals. For example, FIG.2 is a curve illustrating broadband characteristics of a signal synthesizer. As shown in FIG.2, in the embodiment of the present disclosure, signal reflection energy (that is, curve 201) of the signal synthesizer is less than -30dB. The input-output port isolation (that is, curve 202) of the signal synthesizer is less than -30dB. Thus, the signal synthesizer of the present disclosure meets actual use requirements.

The second-level signal allocating network 4 includes multiple power dividers. The second-level signal allocating network 4 is configured to allocate power to multiple signals, which are outputted by various signal synthesizers in the signal synthesizing network 3, and output N signals to N antenna units in the antenna array 5.

The transceiver array 1 adjusts an up slant angle and a down slant angle of the antenna array 5, by adjusting a phase difference between different transceivers.

In view of above, in the present disclosure, the base station antenna performs a vector synthesizing process on signals, by adopting a signal synthesizer, so as to avoid adopting a phase shifter and a sum-difference device, simplify structure (that is, reduce the quantity of components in the signal coupling network and simplify connections among the components) of a signal coupling network, thereby reducing insertion loss of the base station antenna and improving the flexibility for establishing the signal coupling network. More particularly, since the signal synthesizer is adopted to simply the structure of the signal coupling network, the base station antenna in the present disclosure may quickly iterate based on practical needs.

In some embodiments, for any two groups of antenna units in the antenna array 5, a sum of phase of each antenna unit in a group of antenna units is equal to a sum of phase of each antenna unit in another group of antenna unit. Each group of antenna unit includes two antenna units with symmetrical positions in the antenna array 5. Here, two antenna units in each group of antenna units, e.g., are symmetrical to a normal at the center of the antenna array. In the present disclosure, the base station antenna enables a sum of phases of each group of antenna units to be equal, by using the signal coupling network, thereby guaranteeing the accuracy of slant-angle adjustment of the antenna array.

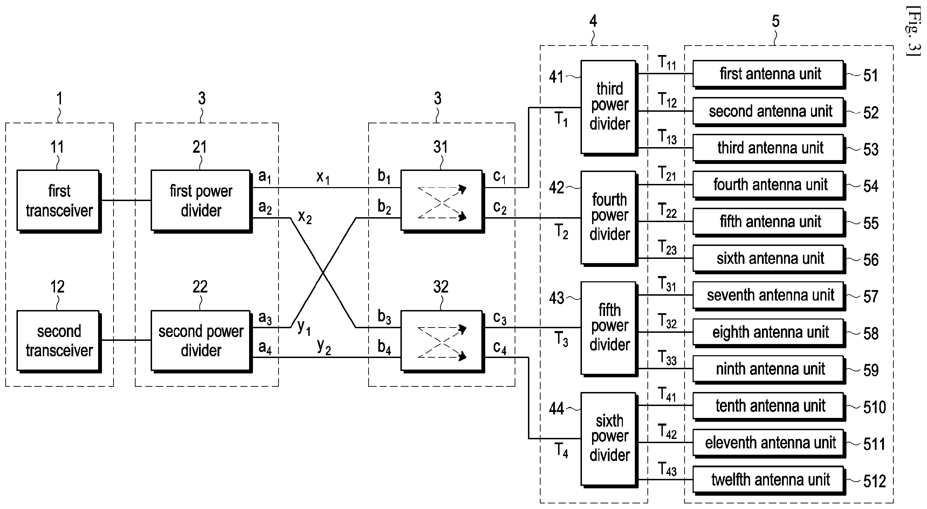

To illustrate the topology of the base station antenna more vividly, an example is provided, in which the value of M is 2, and the value of N is 12. FIG.3 is a schematic diagram illustrating a base station antenna according to some embodiments of the present disclosure.

As shown in FIG.3, a transceiver array 1 includes a first transceiver 11 and a second transceiver 12.

The first-level signal allocating network 2 includes a first power divider 21 and a second power divider 22. The input end of the first power divider 21 is coupled to the output end of the first transceiver 11. The input end of the second power divider 22 is coupled to the output end of the second transceiver 12.

The signal synthesizing network 3 includes a first signal synthesizer 31 and a second signal synthesizer 32. A first input end b1 of the first signal synthesizer 31 is coupled to a first output end a1 of the first power divider. A second input end b2 of the first signal synthesizer 31 is coupled to a first output end a3 of the second power divider 32. A first input end b3 of the second signal synthesizer 32 is coupled to a second output end a2 of the first power divider 21. A second input end b4 of the second signal synthesizer 32 is coupled to a second output end a4 of the second power divider 32. The signal outputted by the first power divider 21 is, e.g., x1 and x2. The signal outputted by the second power divider 22 is, e.g., y1 and y2. The first signal synthesizer 31 may perform a vector synthesis on signals x1 and y1, and output signals $T_1$ and $T_2$. The first signal synthesizer 32 may perform a vector synthesis on signals x2 and y2, and output signals $T_3$ and $T_4$. In some embodiments, in a sequence formed by multiple signals outputted by the signal synthesizing network 3, a sum of vectors of each signal group is the same. The $i^{th}$ group of signals includes both $i^{th}$ signal count from forwards and backwards. As shown in FIG.3, phases of signals $T_1$, $T_2$, $T_3$ and $T_4$ are respectively $P(T_1)$, $P(T_2)$, $P(T_3)$ and $P(T_4)$. A sum of phases of a first output end c1 of the first signal synthesizer 31 and a second output end c4 of the second signal synthesizer is equal to another sum, which is a sum of phases of a second output end c2 of the first signal synthesizer 31 and a first output end c3 of the second signal synthesizer 31. That is, signals outputted by the signal synthesizing network 3 meet requirements of the following formula: $P(T_1)+P(T_4)=P(T_2)+P(T_3)$.

For example, the following table shows phases, when down slant angles of signals (that is, $T_1$ to $T_4$) outputted by the signal synthesizing network 3 are respectively 1, 2, 3 and 4. Phases in Table 1 meet requirements of foregoing formula.

Table 1

| phase \ signal  slant angle | $T_1$ | $T_2$ | $T_3$ | $T_4$ |
|---|---|---|---|---|
| 0 | 90 | 90 | 90 | 90 |
| 1 | 126.71 | 103.27 | 94.37 | 71.29 |
| 2 | 160.36 | 119.73 | 100.27 | 59.64 |
| 3 | -165.67 | 145.71 | 107.29 | 58.67 |
| 4 | -123.00 | -159.72 | 109.72 | 73 |

The second-level signal allocating network 4 includes: a third power divider 41, a fourth power divider 42, a fifth power divider 43 and a sixth power divider 44. An input end of the third power divider 41 is coupled to a first output end c1 of the first signal synthesizer 31. An input end of the fourth power divider 42 is coupled to a second output end c2 of the first signal synthesizer 31. An input end of the fifth power divider 43 is coupled to a first output end c3 of the second signal synthesizer 32. An input end of the sixth power divider 44 is coupled to a second output end c4 of the second signal synthesizer 32.

The antenna array 5 includes a first antenna unit 51 to a twelfth antenna unit 512. The first antenna unit 51 is coupled to a first output end of the third power divider 41. A second antenna unit 52 is coupled to a second output end of the third power divider 41. A third antenna unit 53 is coupled to a third output end of the third power divider 41. A fourth antenna unit 54 is coupled to a first output end of the fourth power divider 42. A fifth antenna unit 55 is coupled to a second output end of the fourth power divider 42. A sixth antenna unit 56 is coupled to a third output end of the fourth power divider 42. A seventh antenna unit 57 is coupled to a first output end of the fifth power divider 43. An eighth antenna unit 58 is coupled to a second output end of the fifth power divider 43. A ninth antenna unit 59 is coupled to a third output end of the fifth power divider 43. A tenth antenna unit 510 is coupled to a first output end of the sixth power divider 44. An eleventh antenna unit 511 is coupled to a second output end of the sixth power divider 44. The twelfth antenna unit 512 is coupled to a second output end of the sixth power divider 44. A sum of phases of each group of antenna units in the antenna array 5 is the same. Taking FIG.3 as an example, signals outputted by the second-level signal allocating network 4 to the antenna array 5 are signals T11 to T43. Phases of signals received by antenna units in the antenna array 5 are respectively $P(T_{11})$, $P(T_{12})$, $P(T_{13})$, $P(T_{21})$, $P(T_{22})$, $P(T_{23})$, $P(T_{31})$, $P(T_{32})$, $P(T_{33})$, $P(T_{41})$, $P(T_{42})$, $P(T_{43})$. Each antenna unit in the antenna array 5 meets requirements of the following formula:

$$P(T_{11}) + P(T_{43}) = \ldots = \ P(T_{23}) + P(T_{31})$$

The foregoing is only preferred embodiments of the present disclosure, which is not for use in limiting the present disclosure.

**Claims**

1. A base station antenna, the base station antenna comprising:

a transceiver array (1), configured to output M signals, wherein M is an integer greater than 1;
an antenna array (5) with N antenna units, wherein N is an integer greater than M;
a first-level signal allocating network (2), configured to allocate power to the M signals, and output P signals, wherein P is an integer greater than M;
a signal synthesizing network (3) with multiple signal synthesizers, wherein each signal synthesizer is configured to perform a vector synthesis on two signals of the P signals to output two synthesized signals; and,

a second-level signal allocating network (4) with multiple power dividers configured to allocate power to the multiple synthesized signals outputted by the multiple signal synthesizers, and output N signals to the N antenna units,

wherein the transceiver array (1) comprises a first transceiver (11) and a second transceiver (12);

the first-level signal allocating network (2) comprises:

a first power divider (21), configured to couple to an output end of the first transceiver (11) via an input end of the first power divider (21);

a second power divider (22), configured to couple to an output end of the second transceiver (12) via an input end of the second power divider (22);

the signal synthesizing network (3) comprises:

a first signal synthesizer (31), configured to couple to a first output end (a1) of the first power divider (21) via a first input end (b1) of the first signal synthesizer (31), and couple to a first output end (a3) of the second power divider (22) via a second input end (b2) of the first signal synthesizer (31);

a second signal synthesizer (32), configured to couple to a second output end (a2) of the first power divider (21) via a first input end (b3) of the second signal synthesizer (32), and couple to a second output end (a4) of the second power divider (22) via a second input end (b4) of the second signal synthesizer (32),

wherein the multiple power dividers comprise:

a third power divider (41), configured to couple to a first output end (c1) of the first signal synthesizer (31) via an input end of the third power divider (41);

a fourth power divider (42), configured to couple to a second output end (c2) of the first signal synthesizer (31) via an input end of the fourth power divider (42);

a fifth power divider (43), configured to couple to a first output end (c3) of the second signal synthesizer (32) via an input end of the fifth power divider (43);

a sixth power divider (44), configured to couple to a second output end (c4) of the second signal synthesizer (32) via an input end of the sixth power divider (44),

wherein a sum of phases of the first output end (c1) of the first signal synthesizer (31) and the second output end (c4) of the second signal synthesizer (32) is equal to another sum, which is a sum of phases of the second output end (c2) of the first signal synthesizer (31) and the first output end (c3) of the second signal synthesizer (32).

2. The base station antenna of claim 1, wherein the signal synthesizer comprises a microstrip line on a dielectric substrate.

3. The base station antenna of claim 1, wherein for any two groups of antenna units in the antenna array, a sum of phases of each antenna unit in a group of antenna units is equal to another sum, which is a sum of phases of each antenna unit in another group of antenna units, and each group of antenna units comprises two antenna units with symmetrical positions in the antenna array.

4. The base station antenna of claim 1, wherein the first-level signal allocating network (2) comprises multiple power dividers.

5. The base station antenna of claim 1, wherein the antenna array (5) comprises:

a first antenna unit (51), configured to couple to a first output end of the third power divider (41);
a second antenna unit (52), configured to couple to a second output end of the third power divider (41);
a third antenna unit (53), configured to couple to a third output end of the third power divider (41);
a fourth antenna unit (54), configured to couple to a first output end of the fourth power divider (42);
a fifth antenna unit (55), configured to couple to a second output end of the fourth power divider (42);
a sixth antenna unit (56), configured to couple to a third output end of the fourth power divider (42);
a seventh antenna unit (57), configured to couple to a first output end of the fifth power divider (43);
an eighth antenna unit (58), configured to couple to a second output end of the fifth power divider (43);
a ninth antenna unit (59), configured to couple to a third output end of the fifth power divider (43);
a tenth antenna unit (510), configured to couple to a first output end of the sixth power divider (44);

an eleventh antenna unit (511), configured to couple to a second output end of the sixth power divider (44);
a twelfth antenna unit (512), configured to couple to a third output end of the sixth power divider (44).

**6.** The base station antenna of claim 1, wherein the transceiver array (1) is further configured to adjust a slant angle of the antenna array (5), by adjusting a phase difference between different transceivers.

**7.** A base station, comprising a base station antenna claimed in any of claims 1 to 6.

**Patentansprüche**

**1.** Basisstationsantenne, wobei die Basisstationsantenne Folgendes umfasst:

ein Transceiver-Anordnung (1), die konfiguriert ist, um M Signale auszugeben, wobei M eine ganze Zahl größer als 1 ist;
eine Antennenanordnung (5) mit N Antenneneinheiten, wobei N eine ganze Zahl größer als M ist;
ein Signalzuweisungsnetz (2) einer ersten Ebene, das konfiguriert ist, um den M-Signalen Leistung zuzuweisen und P Signale auszugeben, wobei P eine ganze Zahl größer als M ist;
ein Signalsynthetisierungsnetz (3) mit mehreren Signalsynthetisierern, wobei jeder Signalsynthetisierer konfiguriert ist, um eine Vektorsynthese an zwei Signalen der P Signale durchzuführen, um zwei synthetisierte Signale auszugeben; und,
ein Signalzuweisungsnetz (4) einer zweiten Ebene mit mehreren Leistungsteilern, das konfiguriert ist, um den mehreren synthetisierten Signalen, die von den mehreren Signalsynthetisierern ausgegeben werden, Leistung zuzuweisen und N Signale an die N Antenneneinheiten auszugeben,
wobei die Transceiver-Anordnung (1) einen ersten Transceiver (11) und einen zweiten Transceiver (12) umfasst;
wobei das Signalzuweisungsnetz (2) der ersten Ebene Folgendes umfasst:

einen ersten Leistungsteiler (21), der so konfiguriert ist, dass er mit einem Ausgangsende des ersten Transceivers (11) über ein Eingangsende des ersten Leistungsteilers (21) gekoppelt ist;
einen zweiten Leistungsteiler (22), der so konfiguriert ist, dass er mit einem Ausgangsende des zweiten Transceivers (12) über ein Eingangsende des zweiten Leistungsteilers (22) gekoppelt ist;
wobei das Signalsynthetisierungsnetz (3) Folgendes umfasst:

einen ersten Signalsynthetisierer (31), der so konfiguriert ist, dass er mit einem ersten Ausgangsende (a1) des ersten Leistungsteilers (21) über ein erstes Eingangsende (b1) des ersten Signalsynthetisierers (31) gekoppelt ist und mit einem ersten Ausgangsende (a3) des zweiten Leistungsteilers (22) über ein zweites Eingangsende (b2) des ersten Signalsynthetisierers (31) gekoppelt ist;
einen zweiten Signalsynthetisierer (32), der so konfiguriert ist, dass er mit einem zweiten Ausgangsende (a2) des ersten Leistungsteilers (21) über ein erstes Eingangsende (b3) des zweiten Signalsynthetisierers (32) gekoppelt ist und mit einem zweiten Ausgangsende (a4) des zweiten Leistungsteilers (22) über ein zweites Eingangsende (b4) des zweiten Signalsynthetisierers (32) gekoppelt ist,
wobei die mehreren Leistungsteiler Folgendes umfassen:

einen dritten Leistungsteiler (41), der so konfiguriert ist, dass er mit einem ersten Ausgangsende (c1) des ersten Signalsynthetisierers (31) über ein Eingangsende des dritten Leistungsteilers (41) gekoppelt ist;
einen vierten Leistungsteiler (42), der so konfiguriert ist, dass er mit einem zweiten Ausgangsende (c2) des ersten Signalsynthetisierers (31) über ein Eingangsende des vierten Leistungsteilers (42) gekoppelt ist;
einen fünften Leistungsteiler (43), der so konfiguriert ist, dass er mit einem ersten Ausgangsende (c3) des zweiten Signalsynthetisierers (32) über ein Eingangsende des fünften Leistungsteilers (43) gekoppelt ist;
einen sechsten Leistungsteiler (44), der so konfiguriert ist, dass er mit einem zweiten Ausgangsende (c4) des zweiten Signalsynthetisierers (32) über ein Eingangsende des sechsten Leistungsteilers (44) gekoppelt ist,
wobei eine Summe von Phasen des ersten Ausgangsendes (c1) des ersten Signalsynthetisierers (31) und des zweiten Ausgangsendes (c4) des zweiten Signalsynthetisierers (32) gleich einer anderen Summe ist, die eine Summe von Phasen des zweiten Ausgangsendes (c2) des ersten Signalsynthetisierers (31) und des ersten Ausgangsendes (c3) des zweiten Signalsynthetisierers (32) ist.

2. Basisstationsantenne nach Anspruch 1, wobei der Signalsynthetisierer eine Mikrostreifenleitung auf einem dielektrischen Substrat umfasst.

3. Basisstationsantenne nach Anspruch 1, wobei für zwei beliebige Gruppen von Antenneneinheiten in der Antennenanordnung eine Summe von Phasen jeder Antenneneinheit in einer Gruppe von Antenneneinheiten gleich einer anderen Summe ist, die eine Summe von Phasen jeder Antenneneinheit in einer anderen Gruppe von Antenneneinheiten ist, und jede Gruppe von Antenneneinheiten zwei Antenneneinheiten mit symmetrischen Positionen in der Antennenanordnung umfasst.

4. Basisstationsantenne nach Anspruch 1, wobei das Signalzuweisungsnetz (2) der ersten Ebene mehrere Leistungsteiler umfasst.

5. Basisstationsantenne nach Anspruch 1, wobei die Antennenanordnung (5) Folgendes umfasst:

eine erste Antenneneinheit (51), die so konfiguriert ist, dass sie mit einem ersten Ausgangsende des dritten Leistungsteilers (41) gekoppelt ist;
eine zweite Antenneneinheit (52), die so konfiguriert ist, dass sie mit einem zweiten Ausgangsende des dritten Leistungsteilers (41) gekoppelt ist;
eine dritte Antenneneinheit (53), die so konfiguriert ist, dass sie mit einem dritten Ausgangsende des dritten Leistungsteilers (41) gekoppelt ist;
eine vierte Antenneneinheit (54), die so konfiguriert ist, dass sie mit einem ersten Ausgangsende des vierten Leistungsteilers (42) gekoppelt ist;
eine fünfte Antenneneinheit (55), die so konfiguriert ist, dass sie mit einem zweiten Ausgangsende des vierten Leistungsteilers (42) gekoppelt ist;
eine sechste Antenneneinheit (56), die so konfiguriert ist, dass sie mit einem dritten Ausgangsende des vierten Leistungsteilers (42) gekoppelt ist;
eine siebte Antenneneinheit (57), die so konfiguriert ist, dass sie mit einem ersten Ausgangsende des fünften Leistungsteilers (43) gekoppelt ist;
eine achte Antenneneinheit (58), die so konfiguriert ist, dass sie mit einem zweiten Ausgangsende des fünften Leistungsteilers (43) gekoppelt ist;
eine neunte Antenneneinheit (59), die so konfiguriert ist, dass sie mit einem dritten Ausgangsende des fünften Leistungsteilers (43) gekoppelt ist;
eine zehnte Antenneneinheit (510), die so konfiguriert ist, dass sie mit einem ersten Ausgangsende des sechsten Leistungsteilers (44) gekoppelt ist;
eine elfte Antenneneinheit (511), die so konfiguriert ist, dass sie mit einem zweiten Ausgangsende des sechsten Leistungsteilers (44) gekoppelt ist;
eine zwölfte Antenneneinheit (512), die so konfiguriert ist, dass sie mit einem dritten Ausgangsende des sechsten Leistungsteilers (44) gekoppelt ist.

6. Basisstationsantenne nach Anspruch 1, wobei die Transceiver-Anordnung (1) ferner konfiguriert ist, um einen Neigungswinkel der Antennenanordnung (5) anzupassen, indem eine Phasendifferenz zwischen verschiedenen Transceivern angepasst wird.

7. Basisstation, umfassend eine Basisstationsantenne nach einem der Ansprüche 1 bis 6.

**Revendications**

1. Antenne de station de base, l'antenne de station de base comprenant :

un réseau d'émetteurs-récepteurs (1), configuré pour émettre M signaux, M étant un nombre entier supérieur à 1 ;
un réseau d'antennes (5) avec N unités d'antennes, N étant un nombre entier supérieur à M ;
un réseau d'attribution de signaux de premier niveau (2), configuré pour attribuer de la puissance aux M signaux, et émettre P signaux, P étant un nombre entier supérieur à M ;
un réseau de synthèse de signaux (3) avec plusieurs synthétiseurs de signaux, chaque synthétiseur de signaux étant configuré pour effectuer une synthèse vectorielle sur deux signaux des P signaux pour sortir deux signaux synthétisés ; et

un réseau d'attribution de signaux de second niveau (4) avec de multiples diviseurs de puissance configurés pour attribuer de la puissance aux multiples signaux synthétisés émis par les multiples synthétiseurs de signaux, et émettre N signaux vers les N unités d'antenne,

dans laquelle le réseau d'émetteurs-récepteurs (1) comprend un premier émetteur-récepteur (11) et un second émetteur-récepteur (12) ;

le réseau d'attribution de signaux de premier niveau (2) comprenant :

un premier diviseur de puissance (21), configuré pour se coupler à une extrémité de sortie du premier émetteur-récepteur (11) via une extrémité d'entrée du premier diviseur de puissance (21) ;

un second diviseur de puissance (22), configuré pour se coupler à une extrémité de sortie du second émetteur-récepteur (12) via une extrémité d'entrée du second diviseur de puissance (22) ;

le réseau de synthèse de signaux (3) comprenant :

un premier synthétiseur de signaux (31), configuré pour se coupler à une première extrémité de sortie (a1) du premier diviseur de puissance (21) via une première extrémité d'entrée (b1) du premier synthétiseur de signaux (31), et se coupler à une première extrémité de sortie (a3) du second diviseur de puissance (22) via une seconde extrémité d'entrée (b2) du premier synthétiseur de signaux (31) ;

un second synthétiseur de signaux (32), configuré pour se coupler à une seconde extrémité de sortie (a2) du premier diviseur de puissance (21) via une première extrémité d'entrée (b3) du second synthétiseur de signaux (32), et se coupler à une seconde extrémité de sortie (a4) du second diviseur de puissance (22) via une seconde extrémité d'entrée (b4) du second synthétiseur de signaux (32),

dans lequel les multiples diviseurs de puissance comprennent :

un troisième diviseur de puissance (41), configuré pour se coupler à une première extrémité de sortie (c1) du premier synthétiseur de signaux (31) via une extrémité d'entrée du troisième diviseur de puissance (41) ;

un quatrième diviseur de puissance (42), configuré pour se coupler à une seconde extrémité de sortie (c2) du premier synthétiseur de signaux (31) via une extrémité d'entrée du quatrième diviseur de puissance (42) ;

un cinquième diviseur de puissance (43), configuré pour se coupler à une première extrémité de sortie (c3) du second synthétiseur de signaux (32) via une extrémité d'entrée du cinquième diviseur de puissance (43) ;

un sixième diviseur de puissance (44), configuré pour se coupler à une seconde extrémité de sortie (c4) du second synthétiseur de signaux (32) via une extrémité d'entrée du sixième diviseur de puissance (44),

dans laquelle une somme des phases de la première extrémité de sortie (c1) du premier synthétiseur de signaux (31) et de la deuxième extrémité de sortie (c4) du deuxième synthétiseur de signaux (32) est égale à une autre somme, qui est une somme des phases de la deuxième extrémité de sortie (c2) du premier synthétiseur de signaux (31) et de la première extrémité de sortie (c3) du deuxième synthétiseur de signaux (32).

2. Antenne de station base de la revendication 1, dans laquelle le synthétiseur de signaux comprend une ligne microruban sur un substrat diélectrique.

3. Antenne de station de base de la revendication 1, dans laquelle pour deux groupes quelconques d'unités d'antenne dans le réseau d'antennes, une somme de phases de chaque unité d'antenne dans un groupe d'unités d'antenne est égale à une autre somme, qui est une somme de phases de chaque unité d'antenne dans un autre groupe d'unités d'antenne, et chaque groupe d'unités d'antenne comprend deux unités d'antenne avec des positions symétriques dans le réseau d'antennes.

4. Antenne de station de base de la revendication 1, dans laquelle le réseau d'attribution de signaux de premier niveau (2) comprend de multiples diviseurs de puissance.

5. Antenne de station de base de la revendication 1, dans laquelle le réseau d'antennes (5) comprend :

une première unité d'antenne (51), configurée pour se coupler à une première extrémité de sortie du troisième diviseur de puissance (41) ;

une seconde unité d'antenne (52), configurée pour se coupler à une seconde extrémité de sortie du troisième diviseur de puissance (41) ;

une troisième unité d'antenne (53), configurée pour se coupler à une troisième extrémité de sortie du troisième diviseur de puissance (41) ;

une quatrième unité d'antenne (54), configurée pour se coupler à une première extrémité de sortie du quatrième diviseur de puissance (42) ;

une cinquième unité d'antenne (55), configurée pour se coupler à une seconde extrémité de sortie du quatrième diviseur de puissance (42) ;

une sixième unité d'antenne (56), configurée pour se coupler à une troisième extrémité de sortie du quatrième diviseur de puissance (42) ;

une septième unité d'antenne (57), configurée pour se coupler à une première extrémité de sortie du cinquième diviseur de puissance (43) ;

une huitième unité d'antenne (58), configurée pour se coupler à une seconde extrémité de sortie du cinquième diviseur de puissance (43) ;

une neuvième unité d'antenne (59), configurée pour se coupler à une troisième extrémité de sortie du cinquième diviseur de puissance (43) ;

une dixième unité d'antenne (510), configurée pour se coupler à une première extrémité de sortie du sixième diviseur de puissance (44) ;

une onzième unité d'antenne (511), configurée pour se coupler à une seconde extrémité de sortie du sixième diviseur de puissance (44) ;

une douzième unité d'antenne (512), configurée pour se coupler à une troisième extrémité de sortie du sixième diviseur de puissance (44).

6. Antenne de station de base de la revendication 1, dans laquelle le réseau d'émetteurs-récepteurs (1) est en outre configuré pour ajuster un angle oblique du réseau d'antennes (5), en ajustant une différence de phase entre différents émetteurs-récepteurs.

7. Station de base comprenant une antenne de station de base de l'une des revendications 1 à 6.

[Fig. 1]

| 1 | 2 | 3 | 4 | 5 |
|---|---|---|---|---|
| transceiver array | first-level signal allocating network | signal synthesizing network | second-level signal allocating network | antenna array |

[Fig. 2]

[Fig. 3]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019190575 A1

- US 2015098495 A1